# EUROPEAN PATENT APPLICATION

(11) **EP 4 838 957 A1**
(43) Date of publication of application: **11.11.2026**
(21) Application number: 24915451.9
(22) Date of filing: 30.12.2024
(51) Int. Cl.: H04W 40/22, H04W 88/04, H04W 8/00, H04W 76/14, H04W 92/18

(54) **RELAY COMMUNICATION**

(30) Priority: 02.01.2024 US 202463616825 P; 30.07.2024 US 202463676921 P
(71) Applicant: LG Electronics Inc., Yeongdeungpo-gu Seoul 07336 (KR)
(72) Inventor: KIM, Laeyoung, Seoul 06772 (KR); YOUN, Myungjune, Seoul 06772 (KR); KIM, Seokjung, Seoul 06772 (KR)
(74) Representative: Plasseraud IP
(86) International application number: PCT/KR2024/021467
(87) International publication number: WO 2025/147039

(57) **Abstract**

One disclosure of the present specification provides a method. The method may comprise the steps of: receiving an additional parameter announcement request message transmitted by a remote UE; transmitting the additional parameter announcement request message to a UE-to-Network relay; receiving a first relay discovery additional information message from the UE-to-Network relay; and transmitting a second relay discovery additional information message to the remote UE.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Methods for supporting multi-hop UE-to-Network relaying, in which one or more relay UEs provide a service to a remote UE, are needed. According to the prior art, there is a problem that parameter(s) related to a relay are not effectively provided to the remote UE.

### DISCLOSURE

### TECHNICAL SOLUTION

In one aspect, a method is provided. The method may include: receiving an additional parameter(s) announcement request message transmitted by the remote UE; transmitting, to the UE-to-Network relay, the additional parameter(s) announcement request message; receiving, from the UE-to-Network relay, a first relay discovery additional information message; and transmitting, to the remote UE, a second relay discovery additional information message.

In another aspect, an apparatus for implementing the method is provided.

In one aspect, a method is provided. The method may include: receiving, from an intermediate UE-to-Network relay, the additional parameter(s) announcement request message transmitted by the remote UE; and transmitting, to the intermediate UE-to-Network relay, a first relay discovery additional information message.

In another aspect, an apparatus for implementing the method is provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIG. 5 shows an example of a UE-to-Network relay discovery procedure according to model A.
FIG. 6 shows an example of a UE-to-Network relay discovery procedure according to model B.
FIG. 7 shows a first example of a scenario related to an announcement of additional parameter(s) in a multi-hop UE-to-Network relaying.
FIG. 8 shows a second example of a scenario related to an announcement of additional parameter(s) in a multi-hop UE-to-Network relaying.
FIG. 9 shows an example of a procedure related to an announcement of additional parameter(s) in a multi-hop UE-to-Network relaying according to an embodiment of the present disclosure.
FIGS. 10a to 10c show an example of an initial access procedure for a remote UE according to an embodiment of the present disclosure.
FIG. 11 shows an example of relay communication according to an embodiment of the present disclosure.
FIG. 12 shows an example of a procedure related to an announcement of additional parameter(s) according to an embodiment of the present disclosure.
FIG. 13 shows an example of an operation performed according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

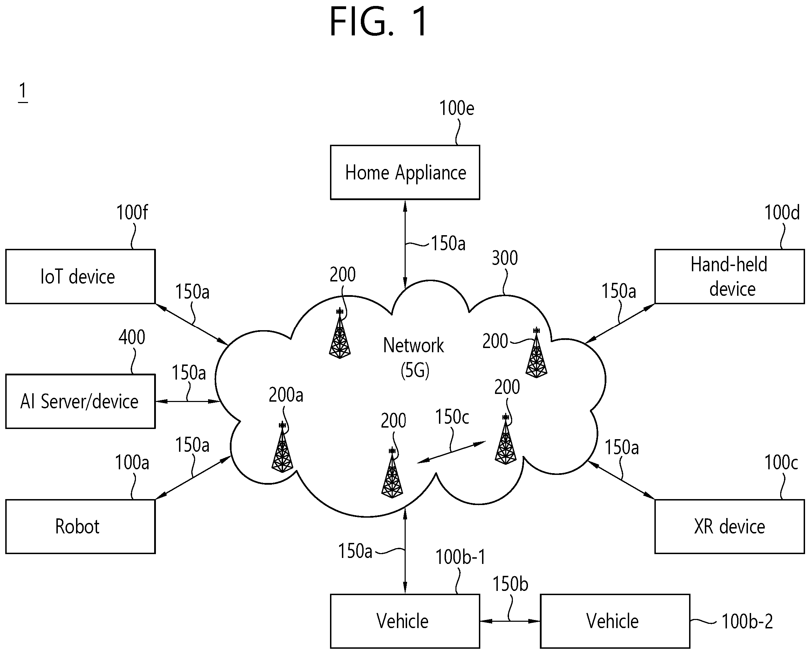

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

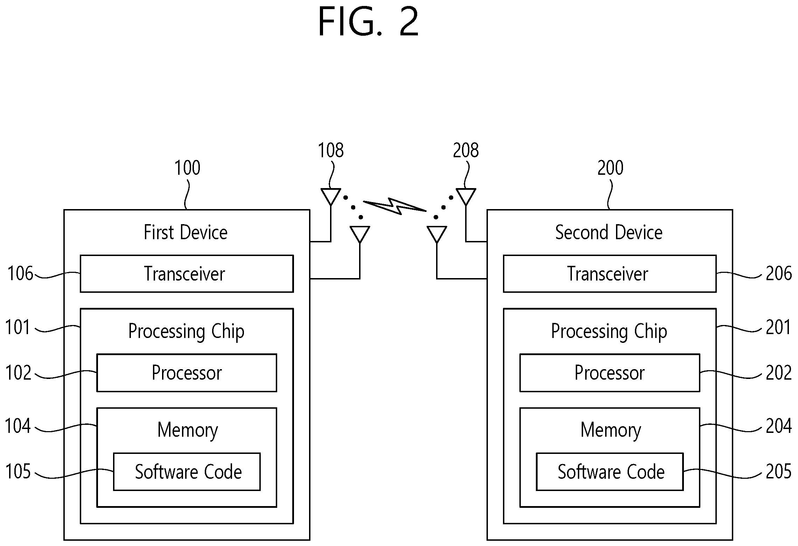

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally, and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

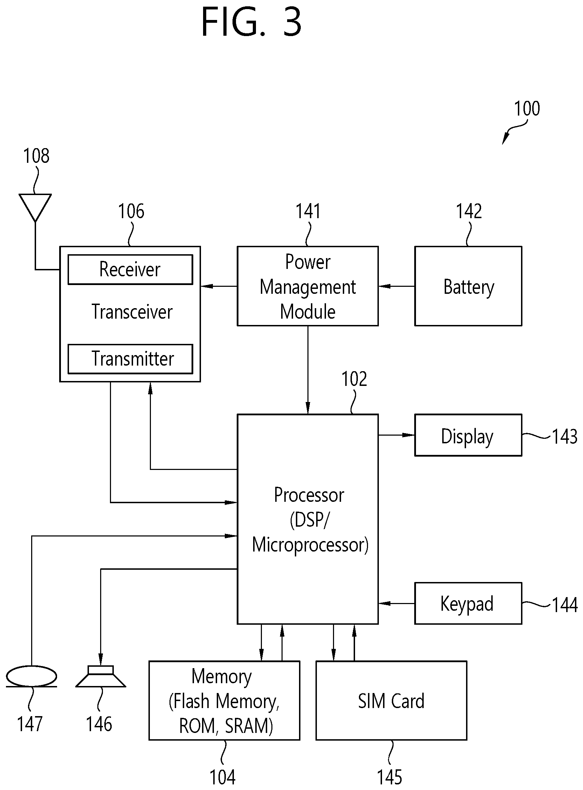

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

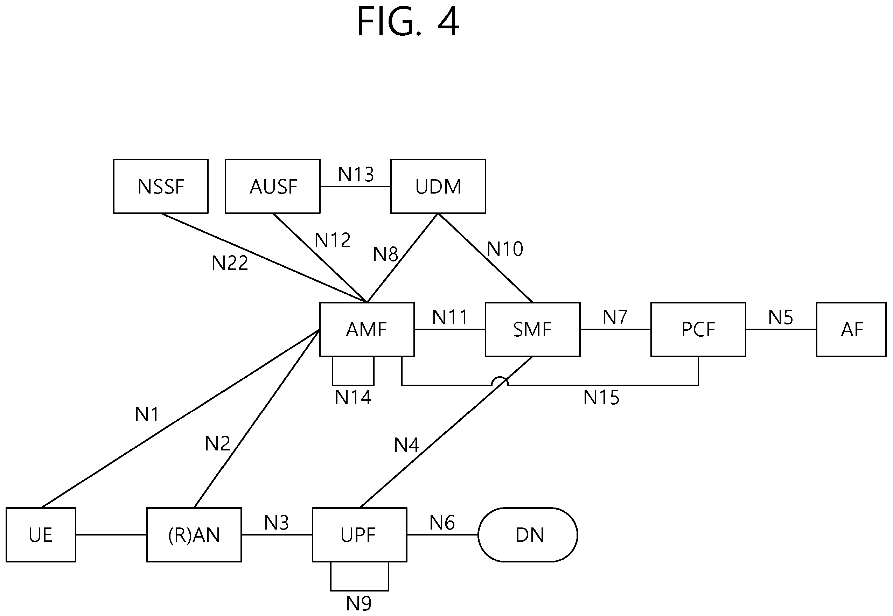

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

An example of UE-to-Network relay discovery is described.

UE-to-Network relay discovery is applicable to both layer-3 and layer-2 UE-to-Network relay discovery for public safety use and commercial services. To perform 5G ProSe UE-to-Network relay discovery, a remote UE and a UE-to-Network relay may be pre-configured or provisioned with the related information as described in 3GPP TS 23.304 V18.4.0 S5.1.

In UE-to-Network relay discovery, the UEs may use pre-configured information or provisioned information for the relay discovery procedure.

The Relay Service Code (RSC) is used in the UE-to-Network relay discovery, to indicate the connectivity service that the UE-to-Network relay provides to the remote UE. The RSCs (including the dedicated RSC for emergency service) may be configured on the UE-to-Network relay and the remote UE as defined in 3GPP TS 23.304 V18.4.0 S5.1.4. The UE-to-Network relay and the remote UE may be aware of whether an RSC is offering a layer-2 or layer-3 UE-to-Network relay service and whether an RSC is for emergency service, based on the policy as specified in 3GPP TS 23.304 V18.4.0 S5.1.4. A UE-to-Network relay supporting multiple RSCs can advertise the RSCs using multiple discovery messages, with one RSC per discovery message.

Additional information not directly used for discovery can also be advertised using the PC5-D protocol stack in single or separate discovery messages of type "relay discovery additional information" as defined in 3GPP TS 23.304 V18.4.0 S5.8.3.1.

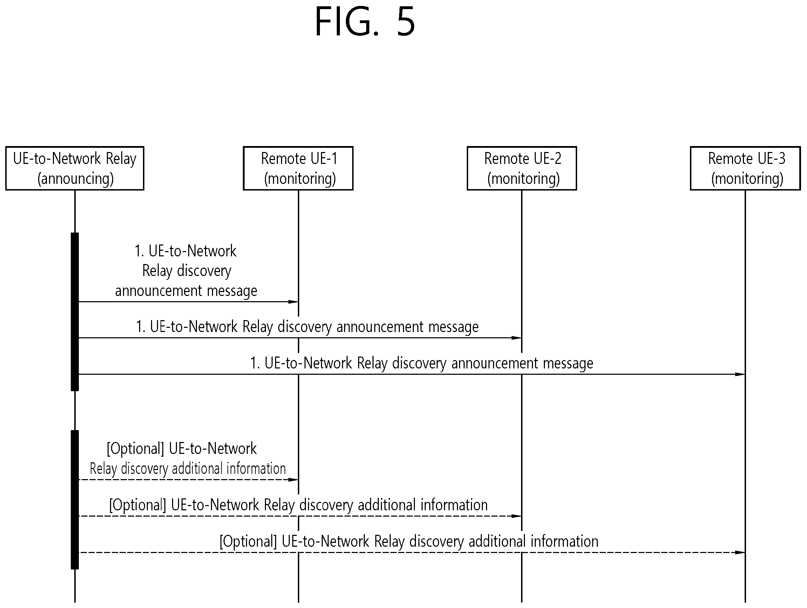

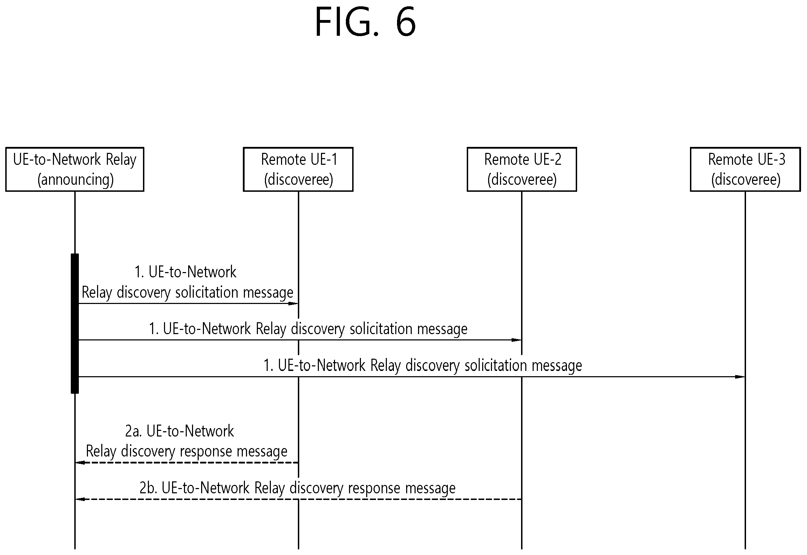

Hereinafter, examples of a model A discovery procedure and a model B discovery procedure will be described with reference to FIG. 5 and FIG. 6.

For example, model A may be a unidirectional discovery procedure. Based on model A, an 'Announcing UE' may periodically broadcast a discovery message announcing presence of the 'Announcing UE' and available services. A 'Monitoring UE' receiving the message may configure direct communication with the 'Announcing UE' by utilizing the information.

For example, model B may be a bidirectional discovery procedure. Based on model B, when a 'Discoverer UE' broadcasts a query message requesting a specific service, a 'Discoveree UE' receiving the query message may announce presence of the 'Discoveree UE' and services through a response message. Through this interaction, the Discoverer UE may find an appropriate Discoveree UE and configure direct communication.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 5 illustrates an example of UE-to-Network relay discovery procedure based on model A.

An example of the UE-to-Network relay discovery procedure based on model A will be described. FIG. 5 is an example of the UE-to-Network relay discovery procedure based on model A.
1. The UE-to-Network relay may send a UE-to-Network relay discovery announcement message. The UE-to-Network relay discovery announcement message may include the type of discovery message, announcer information and RSC. The UE-to-Network relay discovery announcement message may be sent based on the source layer-2 ID and destination layer-2 ID.

For 5G Proximity based Services (ProSe) layer-3 UE-to-Network relay, the layer-3 UE-to-Network relay may only include an RSC in the UE-to-Network relay discovery announcement message when the S-NSSAI associated with the RSC belongs to the allowed NSSAI of the UE-to-Network relay.

The remote UE1 to remote UE3 may determine the destination layer-2 ID for signaling reception.

The remote UE1 to remote UE3 may monitor announcement messages based on the UE-to-Network RSC corresponding to the desired services.

Optionally, the 5G ProSe UE-to-Network relay may also send relay discovery additional information messages as defined in 3GPP TS 23.304 V18.4.0 S6.5.1.3. The parameter(s) included in this message and the source layer-2 ID and destination layer-2 ID used for sending and receiving the message are described in 3GPP TS 23.304 V18.4.0 S5.8.3.

The remote UE may select the UE-to-Network relay based on the information received in step 1.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 6 illustrates an example of UE-to-Network relay discovery procedure based on model B.

An example of the UE-to-Network relay discovery procedure based on model B will be described. FIG. 6 is an example of 5G ProSe UE-to-Network discovery procedure based on model B.
1. The remote UE may send a UE-to-Network relay discovery solicitation message. The 5G ProSe UE-to-Network discovery solicitation message may include the type of discovery message, discoverer information, RSC and optionally target information, and may be sent using the source layer-2 ID and destination layer-2 ID as described in 3GPP TS 23.304 V18.4.0 S5.8.3. The remote UE discovering a 5G ProSe UE-to-Network relay may send a solicitation message with the RSC which is associated to the desired connectivity service. The RSC is based on the policy/parameter(s) specified in 3GPP TS 23.304 V18.4.0 S5.1.4.1.

If the RSC included in the solicitation message matches any of the (pre-)configured RSC of the 5G ProSe UE-to-Network relay and the target information included in the solicitation message, if any, matches the 5G ProSe UE-to-Network relay, 5G ProSe UE-to-Network relays (e.g. relay1 and relay2) may respond to the 5G ProSe remote UE with a UE-to-Network relay discovery response message. The 5G ProSe UE-to-Network relay discovery response message may include the type of discovery message, discoveree information and RSC, and may be sent using the source layer-2 ID and destination layer-2 ID.

For layer-3 UE-to-Network relay, the 5G ProSe UE-to-Network relay may only respond to a matching RSC in the UE-to-Network relay discovery solicitation message when the S-NSSAI associated with the RSC belongs to the allowed NSSAI of the 5G ProSe UE-to-Network relay.

The 5G ProSe remote UE may select the 5G ProSe UE-to-Network relay based on the information received in step 2.

Additional methods to support Proximity-based Services (ProSe) are being discussed in 5GS. For example, it is necessary to enhance ProSe to support multi-hop through an NR PC5 reference point.

According to the conventional technology, multi-hop UE-to-Network relaying was not effectively supported. Accordingly, a method for supporting multi-hop UE-to-Network relaying is required.

In the present specification, UE (User Equipment) and terminal are used interchangeably. In addition, UE-to-Network relay, ProSe UE-to-Network relay, relay, relay UE, UE-NW relay, 5G ProSe UE-to-Network relay, 5G ProSe UE-to-NW relay, 5G ProSe UE-to-Network relay UE and the like are used interchangeably. In addition, remote UE, 5G remote UE, 5G ProSe remote UE and the like are used interchangeably. In addition, a UE that is not a UE-to-Network relay may be referred to as a remote UE or simply as a UE.

In the present specification, UE-to-Network relay may mean all types of UE-to-Network relay (e.g., layer-2 UE-to-Network relay, layer-3 UE-to-Network relay).

In the present specification, descriptions are focused on the proposed content. Regarding ProSe related operations and procedures, TS 23.304 V18.0.0, TS 24.554 V18.0.0, TS 33.536 V17.1.0, TS 33.503 V18.0.0, TS 38.300 V17.4.0, TS 38.401 V17.5.0, TS 38.331 V17.5.0, etc., shall be referred to by default.

In various examples of the disclosure of the present specification, a method for supporting multi-hop UE-to-Network relaying proposed herein may be configured by a combination of one or more of the following operations/configurations/steps.

For reference, various examples of the disclosure of the present specification may be applied only to layer-3 UE-to-Network relaying, or may be applied to both layer-3 UE-to-Network relaying and layer-2 UE-to-Network relaying.

### 1. A first example of the disclosure of the present specification

A first example of the disclosure of the present specification is an example of a method for providing additional parameter(s) to a remote UE in case of multi-hop UE-to-Network relaying.

An example of announcing additional parameter(s) for multi-hop UE-to-Network relaying will be described.

The additional parameter(s) announcement procedure may be related to a request, by a remote UE to a UE-to-Network relay, to announce additional parameter(s) for the following reasons.
- Application running on 5G ProSe layer-3 remote UE may require the NCGI (NR Cell Global ID) of the serving cell of 5G ProSe layer-3 UE-to-Network relay.
- 5G ProSe layer-3 remote UE may require the TAI of the serving cell of 5G ProSe layer-3 UE-to-Network relay with N3IWF support to select a N3IWF.

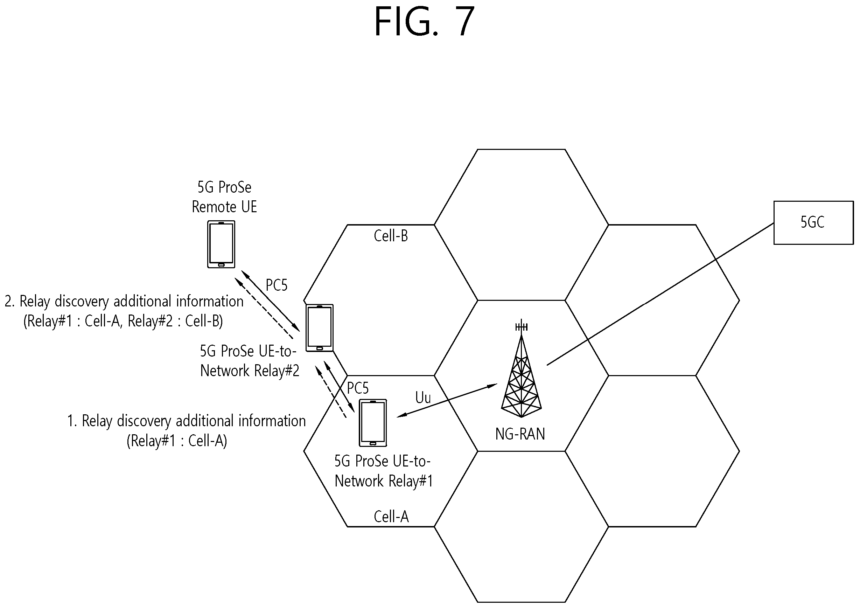

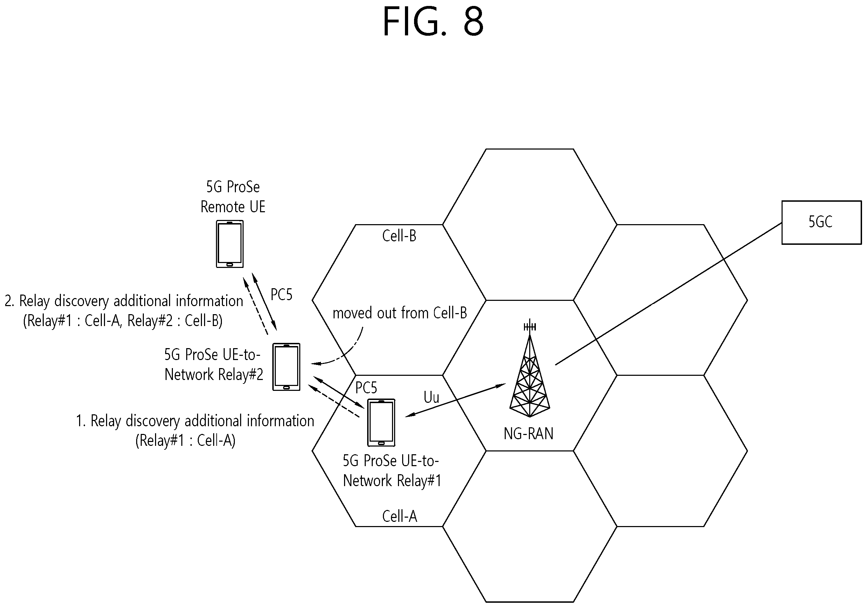

The additional parameter(s) announcement procedure may be supported also for multi-hop UE-to-Network relaying. For multi-hop UE-to-Network relaying, as shown in an example of FIG. 7, there may be the case that other relay than the relay supporting connectivity to the network by using Uu reference point is also in network coverage. In this case, the other relay may be difficult to support connectivity to the network for the remote UE by using Uu reference point with the network because of weak signal strength or quality to the network. In addition, there may be the case that the remote UE may locate a bit far or not close from the 5G ProSe UE-to-Network relay supporting connectivity to the network for the 5G ProSe remote UE by using Uu reference point as shown in FIG. 8.

Therefore, the additional parameter(s) (e.g. NCGI of the serving cell or the most recent serving cell of the other 5G ProSe UE-to-Network relays if available) from other 5G ProSe UE-to-Network relays than the 5G ProSe UE-to-Network relay supporting connectivity to the network for the 5G ProSe remote UE by using Uu reference point may be also useful for the 5G ProSe remote UE.

Hereafter, the 5G ProSe UE-to-Network relay supporting connectivity to the network for the 5G ProSe remote UE by using Uu reference point (or a 5G ProSe UE-to-Network relay direct connecting to the network) is called 1 hop 5G ProSe UE-to-Network relay (or 1 hop relay or the first 5G ProSe UE-to-Network relay or hop#1 5G ProSe UE-to-Network relay), while other 5G ProSe UE-to-Network relay is called n-hop 5G ProSe UE-to-Network relay (or n-hop relay or the nth 5G ProSe UE-to-Network relay or #n 5G ProSe UE-to-Network relay or hop#n 5G ProSe UE-to-Network relay) considering the number of hops for each 5G ProSe UE-to-Network relay from the network towards the 5G ProSe remote UE. Here, n is a value greater than 1.

Additionally, a 5G ProSe UE-to-Network relay that is directly connected to a network may be referred to as a direct-to-network 5G ProSe UE-to-Network relay (or a direct 5G ProSe UE-to-Network relay or a Uu 5G ProSe UE-to-Network relay), and a 5G ProSe UE-to-Network relay that is indirectly connected to a network may be referred to as an indirect-to-network 5G ProSe UE-to-Network relay (or an indirect 5G ProSe UE-to-Network relay or a PC5 5G ProSe UE-to-Network relay or an intermediate 5G ProSe UE-to-Network relay). Accordingly, in the figures below, the 5G ProSe UE-to-Network relay#1 may be referred to as a direct-to-network 5G ProSe UE-to-Network relay, and the 5G ProSe UE-to-Network relay#2 may be referred to as an indirect-to-network 5G ProSe UE-to-Network relay. This may be applied throughout the present specification.

For example, it may be proposed that n-hop 5G ProSe UE-to-Network relay can provide additional parameter(s) to the 5G ProSe remote UE.

Examples of FIG. 7 and FIG. 8 show 2 hop UE-to-Network relaying where the 5G ProSe UE-to-Network relay#1 is 1 hop 5G ProSe UE-to-Network relay and the 5G ProSe UE-to-Network relay#2 is 2 hop 5G ProSe UE-to-Network relay that may support connectivity between the 5G ProSe remote UE and the 5G ProSe UE-to-Network relay#1.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 7 illustrates a first example scenario related to additional parameter(s) announcement for multi-hop UE-to-Network relaying.

FIG. 7 is an example scenario#1 of additional parameter(s) announcement for multi-hop UE-to-Network relaying.

According to the example of FIG. 7, a remote UE may be connected to a network via a relay#2 and a relay#1.

The relay#1 may transmit relay discovery additional information to the relay #2. The relay discovery additional information transmitted by the relay#1 may include information related to cell-A.

According to the example of FIG. 7, the 5G ProSe UE-to-Network relay#2 may provide the NCGI of the serving cell of the relay#2 to the 5G ProSe layer-3 remote UE. For example, since the 5G ProSe UE-to-Network relay#2 is in cell-B (at the edge of cell-B), the 5G ProSe UE-to-Network relay#2 may provide information for cell-B to the 5G ProSe layer-3 remote UE.

The relay#2 may transmit relay discovery additional information to the remote UE. Here, the relay discovery additional information may include information for cell-A related to the relay#1 and information for cell-B related to the relay#2.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 8 illustrates a second example scenario related to additional parameter(s) announcement for multi-hop UE-to-Network relaying.

FIG. 8 describes an example scenario#2 of additional parameter(s) announcement for multi-hop UE-to-Network relaying.

According to the example of FIG. 8, a relay#2 which was located in cell-B may move out from the coverage of cell-B.

A relay#1 may transmit relay discovery additional information to the relay #2. The relay discovery additional information transmitted by the relay #1 may include information related to cell-A.

According to the example of FIG. 8, the relay#2 provides the NCGI of the most recent serving cell of the relay#2 to 5G ProSe layer-3 remote UE. For example, since the 5G ProSe UE-to-Network relay#2 moved out from the network coverage, i.e. cell-B, the 5G ProSe UE-to-Network relay#2 may provide information for cell-B to the 5G ProSe layer-3 remote UE.

The relay#2 may transmit relay discovery additional information to the remote UE. Here, the relay discovery additional information may include information for cell-A related to the relay#1 and information for cell-B related to the relay#2.

For example, the 5G ProSe UE-to-Network relay#2 may provide the last/most recently acquired cell information (information on the cell it last belonged to/was connected to) to the remote UE.

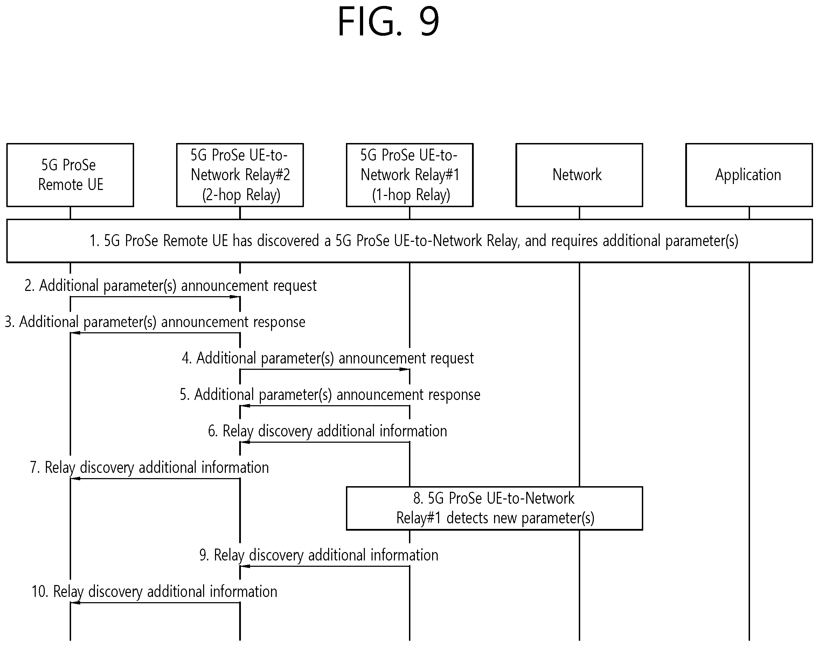

Referring to FIG. 9, an example of a procedure for announcing additional parameter(s) for multi-hop UE-to-Network relay will be described.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 9 illustrates an example of a procedure related to additional parameter(s) announcement in a multi-hop UE-to-Network relaying, according to an embodiment of the present disclosure.

FIG. 9 illustrates a procedure for additional parameter(s) announcement for multi-hop UE-to-Network relaying.

To describe simply, the procedure in FIG. 9 illustrates 2 hop UE-to-Network relaying. The 5G ProSe UE-to-Network relay#1 is 1 hop 5G ProSe UE-to-Network relay and the 5G ProSe UE-to-Network relay#2 is 2 hop 5G ProSe UE-to-Network relay.

The procedure based on the example of FIG. 9 may be also applied to the case for more than 2 hop UE-to-Network relaying. Accordingly, the description or operation for the 5G ProSe UE-to-Network relay#2 (i.e., 2-hop 5G ProSe UE-to-Network relay) may also be applied to a 5G ProSe UE-to-Network relay (i.e., intermediate 5G ProSe UE-to-Network relay) of 3-hop or more hop.
1. A 5G ProSe remote UE may have discovered a 5G ProSe UE-to-Network relay for connectivity to the network and may require additional parameter(s).
2. The remote UE may send, to relay#2, an additional parameter(s) announcement request.

For example, the 5G ProSe remote UE may send to a 5G ProSe UE-to-Network relay#2 an additional parameter(s) announcement request to obtain additional parameter(s) from the 5G ProSe UE-to-Network relay(s) that provide connectivity to the network.

The 5G ProSe remote UE may include one or more of the following information:
A) Information to request additional parameter(s) from n-hop 5G ProSe UE-to-Network relay (e.g., other 5G ProSe UE-to-Network relays than 1-hop 5G ProSe UE-to-Network relay from the network), if the n-hop 5G ProSe UE-to-Network relay exists/is available.
A-i) Optionally, the maximum number of hops from the network (e.g., Nmax) may be included:

If this information is included, the additional parameter(s) announcement request may be a request for additional parameter(s) from the 2 hop 5G ProSe UE-to-Network relay to Nmax-hop 5G ProSe UE-to-Network relay from the network. Otherwise, the request may be for additional parameter(s) from all n-hop 5G ProSe UE-to-Network relays (e.g., from all other 5G ProSe UE-to-Network relays than the 1-hop 5G ProSe UE-to-Network relay from the network).

The information of the above A) may not be included, and a value/information including the Nmax value or representing all may be included.

A-ii) Optionally, the maximum time elapsed since the n-hop 5G ProSe UE-to-Network relays obtained the additional parameter(s) from the network may be included:

If this information is included, the additional parameter(s) announcement request may be a request for additional parameter(s) from the n-hop 5G ProSe UE-to-Network relays obtained within the maximum time. For example, if the maximum time is 3 minutes, providing the additional parameter(s) to the 5G ProSe remote UE may be valid if it took less than 3 minutes after the n-hop 5G ProSe UE-to-Network relay obtained the additional parameter(s) from the network. In the above, an example was described with less than the maximum time, but it may include equal to the maximum time as well as less than the maximum time. If the maximum time information is not included, the additional parameter(s) announcement request may be a request for additional parameter(s) that the n-hop 5G ProSe UE-to-Network relays obtained most recently from the network.

The time information related to maximum time may be expressed in various units (e.g., msec, second, minute, etc.). Alternatively, the time information may be expressed as absolute time (e.g., to request information acquired after a specific year, month, day, hour, and minute). Alternatively, the time information may be expressed in the form of a time window (e.g., to request information acquired within a certain period in the past relative to the current time).

The information to request additional parameter(s) of the above A) may not be included, and a value/information including the maximum time elapsed value or representing infinite time may be included.

One or more of the information among the above A), A-i), and A-ii) may not be included when the remote UE is provided with a network connection service through N3IWF. Alternatively, one or more of the information among the above A), A-i), and A-ii) may be included only when the remote UE is a layer-3 remote UE provided with a network connection service without through N3IWF. Alternatively, one or more of the information among the above A), A-i), and A-ii) may be included only when the remote UE is a layer-2 remote UE or a layer- 3 remote UE provided with a network connection service without through N3IWF.

Additional parameter(s) from the 1 hop 5G ProSe UE-to-Network relay from the network may be provided to the 5G ProSe remote UE regardless whether the above information is included or not in the request.

3. The relay#2 may send, to the remote UE, an additional parameter(s) announcement response message.

The 5G ProSe UE-to-Network relay#2 may acknowledge receipt of the request in step 2 with an additional parameter(s) announcement response (including Additional_Parameter(s)_Announcement_Request_Refresh timer). The Additional_Parameter(s)_Announcement_Request_Refresh timer (configurable in the 5G ProSe UE-to-Network relay#2), may be provided to the 5G ProSe remote UE. When this timer expires, the 5G ProSe remote UE may repeat the additional parameter(s) announcement request procedure if the remote UE needs to obtain the additional parameter(s). If the 5G ProSe remote UE does not initiate new additional parameter(s) announcement request procedure when this Additional_Parameter(s)_Announcement_Request_Refresh timer expires and no other UE requests additional parameter(s) announcement before the Additional_Parameter(s)_Announcement_Request_Refresh timer expires in the 5G ProSe UE-to-Network relay#2, then the relay#2 may stop requesting additional parameter(s) announcement to the 5G ProSe UE-to-Network relay#1.

For reference, step 3 may be performed after receiving the message of step 5.

4. The relay#2 may send, to the relay#1, an additional parameter(s) announcement request message.

For example, based on the additional parameter(s) announcement request sent by the 5G ProSe remote UE in step 2, the 5G ProSe UE-to-Network relay#2 may send to the 5G ProSe UE-to-Network relay#1 an additional parameter(s) announcement request to obtain additional parameter(s) from the 5G ProSe UE-to-Network relay#1.

5. The relay#1 may send, to the relay#2, an additional parameter(s) announcement response message.

The 5G ProSe UE-to-Network relay#1 may acknowledge receipt of the request in step 4 with an additional parameter(s) announcement response (including Additional_Parameter(s)_Announcement_Request_Refresh timer). The Additional_Parameter(s)_Announcement_Request_Refresh timer configurable in the 5G ProSe UE-to-Network relay#1, may be provided to the 5G ProSe UE-to-Network relay#2.

NOTE: It is assumed that same Additional_Parameter(s)_Announcement_Request_Refresh timer is configured in all 5G ProSe UE-to-Network relays. There may be cases where the timer values configured between the relays are different or settings for different timer values are received from the network. In such cases, the timer value (which may be provided in step 5) provided by the 5G ProSe UE-to-Network relay#1 may be used by the 5G ProSe UE-to-Network relay#2 and the 5G ProSe remote UE. Accordingly, the 5G ProSe UE-to-Network relay#2 may provide the timer value provided by the 5G ProSe UE-to-Network relay#1 to the 5G ProSe remote UE.

When this timer expires, the 5G ProSe UE-to-Network relay#2 may repeat the additional parameter(s) announcement request procedure if the relay#2 needs to obtain the additional parameter(s) from the 5G ProSe UE-to-Network relay#1 because the 5G ProSe remote UE still needs the additional parameter(s). If the 5G ProSe UE-to-Network relay#2 does not initiate new additional parameter(s) announcement request procedure when the Additional_Parameter(s)_Announcement_Request_Refresh timer expires in the 5G ProSe UE-to-Network relay#1 and no other UE requests additional parameter(s) announcement, then the relay#1 may stop announcing the additional parameter(s).

6. The relay#1 may send, to the relay#2, relay discovery additional information.

For example, the 5G ProSe UE-to-Network relay#1 may announce the additional parameter(s) by sending a relay discovery additional information message. This operation may be repeated periodically with a configurable frequency (e.g., normally higher than the one related to the Additional_Parameter(s)_Announcement_Request_Refresh timer) until there is no UE requesting to announce the additional parameter(s) as determined by the Additional_Parameter(s)_Announcement_Request_Refresh timer running in the 5G ProSe UE-to-Network relay#1. For example, if the Additional_Parameter(s)_Announcement_Request_Refresh timer value is 5 minutes, the relay discovery additional information message may be repeatedly transmitted every 1 minute, which is a higher frequency than the 5 minutes.

The relay discovery additional information message may include relay service code, announcer information (e.g., user info ID of the 5G ProSe UE-to-Network relay#1) and one or more of the following additional parameter(s):
- NCGI: indicates the NCGI of the serving cell of the 5G ProSe UE-to-Network relay#1. This parameter may be requested by application running on 5G ProSe layer-3 remote UE.
- TAI: indicates the Tracking Area (TA) ID of the serving cell of the 5G ProSe UE-to-Network relay#1. This parameter may be used by 5G ProSe layer-3 remote UE to select a N3IWF.

The relay discovery additional information message may include hop# (e.g., the number of hop(s)), which may indicate how many hop(s) the 5G ProSe UE-to-Network relay#1 is from the network (e.g., the number of hops for realy#1 is 1 in FIG. 9).

The relay discovery additional information message may be transmitted using one of the following destination layer-2 IDs:
- Default destination layer-2 ID configured/provisioned for transmission and reception of the relay discovery additional information message: the default destination layer-2 ID may be configured/provisioned for the 5G ProSe UE-to-Network relay for the transmission, and for the 5G ProSe remote UE for the reception. A plurality of default destination layer-2 IDs may be configured/provisioned.
- Default destination layer-2 ID configured/provisioned for transmission and reception of the relay discovery additional information message from the 1-hop 5G ProSe UE-to-Network relay: the default destination layer-2 ID may be configured/provisioned for the 1-hop 5G ProSe UE-to-Network relay (or a relay performing the operation thereof) for transmission, and for the n-hop 5G ProSe UE-to-Network relay (or a relay performing the operation thereof) and the 5G ProSe remote UE for reception. A plurality of default destination layer-2 IDs may be configured/provisioned.
- Destination layer-2 ID allocated for transmission of the relay discovery additional information message in response to the request from the 5G ProSe UE-to-Network relay#2: the destination layer-2 ID may be allocated by the 5G ProSe UE-to-Network relay#1 when the relay#1 receives the step 4 message, and may be notified to the 5G ProSe UE-to-Network relay#2 by being included in the step 5 message.

7. The relay#2 may send, to the remote UE, relay discovery additional information.

For example, based on the relay discovery additional information message sent by the 5G ProSe UE-to-Network relay#1 in step 6, the 5G ProSe UE-to-Network relay#2 may send a relay discovery additional information message. The 5G ProSe UE-to-Network relay#2 may provide its additional parameter(s) in the relay discovery additional information message based on the request received from the 5G ProSe remote UE in step 2. If the additional parameter(s) from the 5G ProSe UE-to-Network relay#2 are available and need to be provided, the 5G ProSe UE-to-Network relay#2 includes relay service code, announcer information (e.g., user info ID of the 5G ProSe UE-to-Network relay#2) and the following additional parameter(s):
- NCGI: indicates the NCGI of the serving cell or the most recent serving cell of the 5G ProSe UE-to-Network relay#2. This parameter may be requested by application running on 5G ProSe layer-3 remote UE.

The 5G ProSe UE-to-Network relay#2 may provide its additional parameter(s) only if the NCGI for the 5G ProSe UE-to-Network relay#2 is different from the NCGI for the 5G ProSe UE-to-Network relay#1. For example, the n-hop relay may provide NCGI information for the n-hop relay only if the NCGI for the n-hop relay is different from the NCGI for the 1-hop relay. Alternatively, if other relays exist between the n-hop relay and the 1-hop relay, the n-hop relay may provide NCGI information for the n-hop relay only if the NCGI for the n-hop relay is different from the NCGI for all the other relays. Alternatively, only a relay connected to the 5G ProSe remote UE may provide its own NCGI information. Alternatively, the relay may provide its own NCGI information only if it is determined that the NCGI and/or location (e.g., coordinate information) of the relay is close to the location of the 5G ProSe remote UE, based on the location (e.g., coordinate information) (which may be included in step 2) of the 5G ProSe remote UE. Alternatively, the NCGI information may be provided only if the 5G ProSe UE-to-Network relay#2 is within network coverage. In such cases, time stamp information may not be included. For example, in the present disclosure, the expression that a UE is within network coverage may be interpreted as the following examples. For example, the expression may be interpreted as a case where the UE is directly connected to a network, a case where it is possible for the UE to directly connect to the network, a case where the UE can be served by a base station, a case where the UE has a serving cell, a case where the UE can receive/acquire system information from a base station, a case where the UE is registered with the network, or a case where the UE can register with the network .
- Time stamp: indicates the time when the 5G ProSe UE-to-Network relay#2 obtained the provided NCGI.

The time stamp information may be expressed as absolute time or UTC time (e.g., in order to represent that the NCGI information was acquired at a specific year, month, day, hour, and minute). Alternatively, the time stamp information may express the time elapsed since the acquisition of the NCGI information in various units (e.g., msec, second, minute, etc.).
- Information indicating that the 5G ProSe UE-to-Network relay#2 is within network coverage if the 5G ProSe UE-to-Network relay#2 is within the network coverage. The information may also be expressed using time stamp information.

If the additional parameter(s) from the 5G ProSe UE-to-Network relay#2 are provided, the relay discovery additional information message may include hop# to indicate how many hop(s) the 5G ProSe UE-to-Network relay#2 is from the network (e.g., the number of hops for the relay#2 is 2 in FIG. 9).

The 5G ProSe UE-to-Network relay#2 may provide only its own additional parameter(s) to the 5G ProSe remote UE. This may be performed only if the 5G ProSe UE-to-Network relay#2 is within network coverage. In a case where the 5G ProSe UE-to-Network relay#2 provides only its own additional parameter(s) to the 5G ProSe remote UE, the 5G ProSe UE-to-Network relay#2 may not request the 5G ProSe UE-to-Network relay#1 to provide additional parameter(s). Alternatively, the 5G ProSe UE-to-Network relay#2 may obtain additional parameter(s) from the 5G ProSe UE-to-Network relay#1 but not provide the additional parameter(s) to the 5G ProSe remote UE or provide additional parameter(s) for the 5G ProSe UE-to-Network relay#2 as a replacement.

The 5G ProSe UE-to-Network relay#2 may provide its own additional parameter(s) to the 5G ProSe remote UE without requesting the 5G ProSe UE-to-Network relay#1 to provide additional parameter(s) when the 5G ProSe UE-to-Network relay#2 is within network coverage. And then the 5G ProSe UE-to-Network may request the 5G ProSe UE-to-Network relay#1 to provide additional parameter(s) when the 5G ProSe UE-to-Network relay#2 is not within or moves out from the network coverage.

The 5G ProSe UE-to-Network relay#2 may determine to provide its own additional parameter(s) as the following cases. For example, the 5G ProSe UE-to-Network relay#2 may determine to provide its own additional parameter(s) in a case where the 5G ProSe UE-to-Network relay#1 is connected to or was connected to a different PLMN from the 5G ProSe UE-to-Network relay#2, or in a case where the 5G ProSe UE-to-Network relay#1 is connected to or was connected to the same PLMN as the relay#2.

In a case where the 5G ProSe UE-to-Network relay#2 is required to provide its own additional parameter(s) to the 5G ProSe remote UE, the relay#2 may provide the additional parameter(s) after step 3. In this case, the message of step 7 may be understood as forwarding the message received from the 5G ProSe UE-to-Network relay#1.

The relay discovery additional information message of step 7 may be transmitted using one of the following destination layer-2 IDs:
- Default destination layer-2 ID configured/provisioned for transmission and reception of the relay discovery additional information message: the default destination layer-2 ID may be configured/provisioned for the 5G ProSe UE-to-Network relay for the transmission, and for the 5G ProSe remote UE for the reception. A plurality of default destination layer-2 IDs may be configured/provisioned.
- Default destination layer-2 ID configured/provisioned for transmission and reception of the relay discovery additional information message from the 2-hop 5G ProSe UE-to-Network relay: the default destination layer-2 ID may be configured/provisioned for the 2-hop 5G ProSe UE-to-Network relay (or a relay performing the operation thereof) for the transmission, and for the 5G ProSe UE-to-Network relay (or a relay performing the operation thereof) with a hop count greater than 2-hop and the 5G ProSe remote UE for the reception. A plurality of default destination layer-2 IDs may be configured/provisioned.
- Default destination layer-2 ID configured/provisioned for transmission and reception of the relay discovery additional information message from n-hop 5G ProSe UE-to-Network relay: the default destination layer-2 ID is configured/provisioned for n-hop 5G ProSe UE-to-Network relay (or a relay performing the operation thereof) for the transmission, and for the 5G ProSe remote UE for the reception. A plurality of default destination layer-2 IDs may be configured/provisioned.
- Destination layer-2 ID allocated for transmission of the relay discovery additional information message in response to the request from the 5G ProSe UE-to-Network relay#2: the destination layer-2 ID may be allocated by the 5G ProSe UE-to-Network relay#2 when the relay#2 receives the step 2 message, and may be notified to the 5G ProSe remote UE by being included in the step 3 message.

8. The 5G ProSe UE-to-Network relay#1 may detect new or updated additional parameter(s).

9. The relay#1 may send, to the relay#2, relay discovery additional information.

If the new or updated additional parameter(s) are detected in step 8, the 5G ProSe UE-to-Network relay#1 may announce the additional parameter(s) by sending a relay discovery additional information message immediately. The relay#1 may repeat this periodically with a configurable frequency as in step 6 until there are no UEs requesting to announce the additional parameter(s), for example, until the Additional_Parameter(s)_Announcement_Request_Refresh timer expires in the 5G ProSe UE-to-Network relay#1.

10. The relay#2 may send, to the remote UE, relay discovery additional information.

Based on the relay discovery additional information message sent by the 5G ProSe UE-to-Network relay#1 in step 9, the 5G ProSe UE-to-Network relay#2 may send a relay discovery additional information message. Based on the request (in relation to the included information, the step 7 is referred to) received from the 5G ProSe remote UE in step 2, the 5G ProSe UE-to-Network relay#2 may provide its additional parameter(s) in the relay discovery additional information message, if its additional parameter(s) are available and still valid.

If the 5G ProSe UE-to-Network relay#2 detects new or updated additional parameter(s), the relay#2 may send a relay discovery additional information message immediately including the new or updated additional parameter(s). This operation may be repeated periodically with a configurable frequency (normally higher than the frequency related to the Additional_Parameter(s)_Announcement_Request_Refresh timer) until there is no UE requesting to announce the additional parameter(s) as determined by the Additional_Parameter(s)_Announcement_Request_Refresh timer running in the 5G ProSe UE-to-Network relay#2. If the 5G ProSe UE-to-Network relay#2 provided additional parameter(s) only when the 5G ProSe UE-to-Network relay#2 is within network coverage, the relay#2 may transmit a message (e.g., relay discovery additional information message) to inform the remote UE of moving out of the relay#2 from the network coverage.

Application running on the 5G ProSe remote UE can use the NCGI for the 5G ProSe UE-to-Network relay#2 as well (e.g., a case where the application provides the NCGI for the 5G ProSe UE-to-Network relay#2 in addition to the NCGI for the 5G ProSe UE-to-Network relay#1 to the IMS network, or provides only the NCGI for the 5G ProSe UE-to-Network relay#2 to the IMS network).

Application running on the 5G ProSe remote UE can use the NCGI of the most recent serving cell of the 5G ProSe remote UE if the cell exists/is available (e.g., a case where the application also provides the NCGI for the 5G ProSe remote UE to the IMS network).

In the above example, it has been described that the n-hop relay provides additional parameter(s) based on the request of the 5G ProSe remote UE, but it is merely an example. For example, the additional parameter(s) may also be provided based on a local policy/configuration of the n-hop relay or a policy/configuration received from a network.

For the described procedure based on the example of FIG. 9, an existing additional parameter(s) announcement request/response message may be used in an extended manner, or a new PC5-S (PC5 signaling) message may be defined and used.

For the described procedure, an existing relay discovery additional information message may be used in an extended manner, or a new PC5-D (PC5 discovery) message may be defined and used.

### 2. A second example of the disclosure of the present specification

According to a second example of the disclosure of the present specification, an example of a method for providing system information to a remote UE in case of multi-hop UE-to-Network relaying will be described.

In two-hop UE-to-Network relaying scenario, a 2-hop 5G ProSe UE-to-Network relay (hereinafter, also referred to as 2-hop relay) may perform one or more of the following operations:
1) The 2-hop relay may provide, to the 5G ProSe remote UE, system information (which is CellAccessRelatedInfo and/or MIB and/or SIB) provided by a 1-hop 5G ProSe UE-to-Network relay. For example, the 2-hop relay may explicitly or implicitly express that the system information is provided by the 1-hop 5G ProSe UE-to-Network relay.
2) The 2-hop relay may provide, to the 5G ProSe remote UE, system information of its own serving cell. For example, the 2-hop relay may provide, to the 5G ProSe remote UE, system information of its own serving cell when the 2-hop 5G ProSe UE-to-Network relay is within network coverage. For example, the 2-hop 5G ProSe UE-to-Network relay may explicitly or implicitly notify the remote UE that the 2-hop relay is within the network coverage. For example, the 2-hop 5G ProSe UE-to-Network relay may explicitly or implicitly express that the system information is provided by the 2-hop 5G ProSe UE-to-Network relay.
3) The 2-hop relay may provide, to the 5G ProSe remote UE, the system information of its most recent serving cell. For example, the 2-hop relay may provide, to the 5G ProSe remote UE, the system information of its most recent serving cell only when the 2-hop 5G ProSe UE-to-Network relay has been within network coverage within a certain recent period of time.

For example, the system information may additionally include time stamp information indicating when the 2-hop 5G ProSe UE-to-Network relay acquired the system information. For example, the time stamp information may be expressed as absolute time or UTC time (e.g., to express that the system information was acquired at a certain year, month, day, hour, and minute). Alternatively, the time stamp information may express the time elapsed after the acquisition of the system information in various units (e.g., msec, second, minute, etc.).

For example, the 2-hop relay may explicitly or implicitly express that the system information is provided by the 2-hop 5G ProSe UE-to-Network relay.

The operations described in the second example of the present disclosure may be performed based on a request (which may be interpreted by substituting system information for additional parameter(s), referring to step 2 in FIG. 9 according to the first example of the present disclosure) from the 5G ProSe remote UE, a local policy/configuration of a 2-hop relay, a policy/configuration provided from a network, and the like.

For example, when the 2-hop 5G ProSe UE-to-Network relay is or was connected to a different PLMN from the 1-hop 5G ProSe UE-to-Network relay #1, or when the 2-hop 5G ProSe UE-to-Network relay is or was connected to the same PLMN as the 1-hop 5G ProSe UE-to-Network relay #1, the above 2) to 3) may be performed.

The system information in 2) to 3) above may include location information (e.g., NCGI and/or TAI information), or the location information may be provided separately from the system information.

After performing 2) above, if the 2-hop 5G ProSe UE-to-Network relay moves out from network coverage, the 2-hop relay may notify the remote UE of this.

In order for the operation according to the second example of the present disclosure, an existing PC5-RRC message may be extended and used.

In the second example of the present disclosure, description has been focused on two-hop UE-to-Network relaying and 2-hop 5G ProSe UE-to-Network relay, but this is merely an example. The second example of the present disclosure may also be applied to a 5G ProSe UE-to-Network relay with 3-hop or more hop in multi-hop UE-to-Network relaying.

### 3. A third example of the disclosure of the present specification

An example of a method for providing location information of a UE-to-Network relay to an AMF in case of multi-hop UE-to-Network relaying will be described.

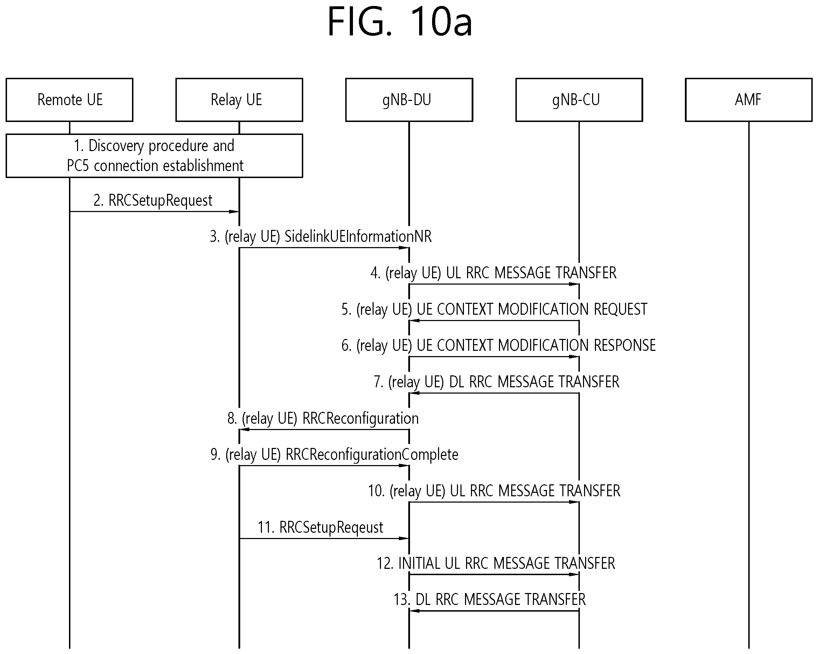

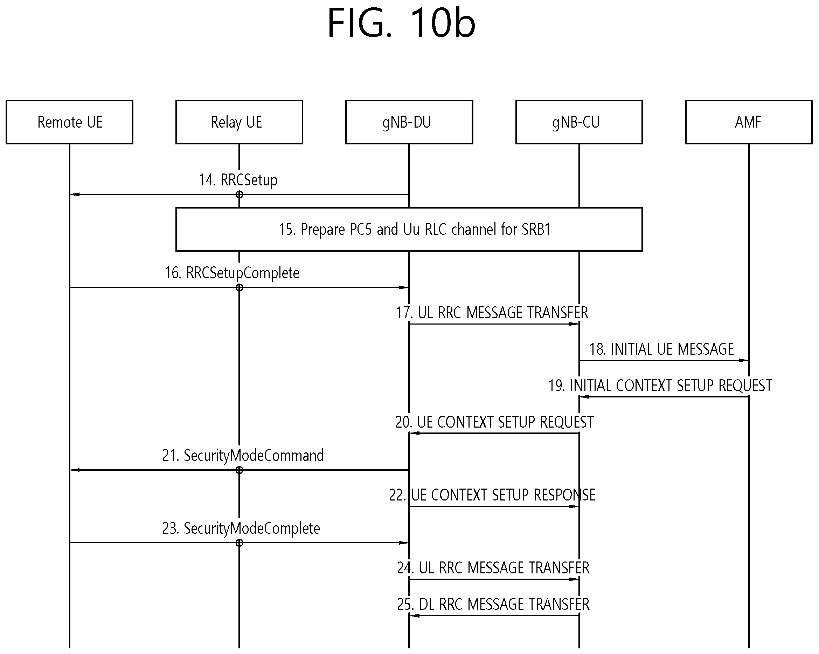

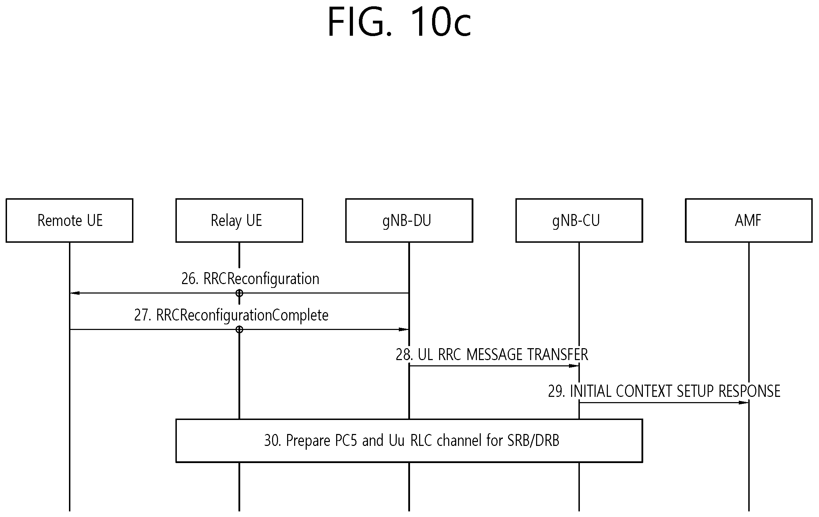

Description is provided based on the remote UE initial access procedure according to the examples of FIGS. 10a to 10c. When the drawings/procedures according to the examples of FIGS. 10a to 10c are extended to a two-hop UE-to-Network relaying scenario, the relay UE in the following drawings/procedures corresponds to a 1-hop 5G ProSe UE-to-Network relay, and it may be understood that a 2-hop 5G ProSe UE-to-Network relay exists between the remote UE and the relay UE.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIGS. 10a to 10c illustrate an example of an initial access procedure of a remote UE according to an embodiment of the present disclosure.

FIGS. 10a to 10c illustrate an example of a remote UE initial access procedure.

For reference, for operations other than those described below, TS 38.401 V17.5.0 Figure 8.19.1-1 may be referred to.
1. The remote UE and the relay UE may perform a discovery procedure and PC5 connection establishment.
2. The remote UE may transmit an RRCSetupRequest to the relay UE.
3. The relay UE may transmit SidelinkUEInformationNR to the gNB-DU.
4. The gNB-DU may transmit a UL RRC message transfer message to the gNB-CU.
5. The gNB-CU may transmit a UE context modification request to the gNB-DU.
6. The gNB-DU may transmit a UE context modification response to the gNB-CU.
7. The gNB-CU may transmit a DL RRC message transfer message to the gNB-DU.
8. The gNB-DU may transmit an RRC reconfiguration message to the relay UE.
9. The relay UE may transmit an RRC reconfiguration complete message to the gNB-DU.
10. The gNB-DU may transmit a UL RRC message transfer message to the gNB-CU.
11. The relay UE may transmit an RRC setup request message to the gNB-DU.
12. The gNB-DU may transmit an initial UL RRC message transfer message to the gNB-CU.
13. The gNB-CU may transmit a DL RRC message transfer message to the gNB-DU.
14. The gNB-DU may transmit an RRC setup message to the remote UE via the relay UE.
15. The relay UE, the gNB-DU, and the gNB-CU may prepare PC5 and Uu RLC channels for SRB1.
16. The remote UE may transmit an RRC setup complete message to the gNB-DU via the relay UE.
17. gNB-DU may transmit a UL RRC message transfer message to gNB-CU.
18. gNB-CU may transmit an initial message to AMF.
19. AMF may transmit an initial context setup request message to gNB-CU.
20. gNB-CU may transmit a UE context setup request message to gNB-DU.
21. gNB-DU may transmit a security mode command message to the remote UE via the relay UE.
22. gNB-DU may transmit a UE context setup response message to gNB-CU.
23. The remote UE may transmit a security mode complete message to gNB-DU.
24. gNB-DU may transmit a UL RRC message transfer message to gNB-CU.
25. gNB-CU may transmit a DL RRC message transfer message to gNB-DU.
26. gNB-DU may transmit an RRC reconfiguration message to the remote UE via the relay UE.
27. The remote UE may transmit an RRC reconfiguration complete message to gNB-DU.
28. gNB-DU may transmit a UL RRC message transfer message to gNB-CU.
29. gNB-CU may transmit an initial context setup response message to AMF.
30. The relay UE, gNB-DU, and gNB-CU may prepare PC5 and Uu RLC channels for SRB/DRB.

Before step 3 is performed, or while step 15 is being performed, or while step 16 is being performed, the following operations may be performed:

For example, the 1-hop 5G ProSe UE-to-Network relay may acquire location information (NCGI and/or TAI information) of the 2-hop 5G ProSe UE-to-Network relay from the 2-hop 5G ProSe UE-to-Network relay. For example, if the 2-hop 5G ProSe UE-to-Network relay is within network coverage, the location information may be provided to the 1-hop 5G ProSe UE-to-Network relay.

For example, if the 1-hop 5G ProSe UE-to-Network relay acquires the location information of the 2-hop 5G ProSe UE-to-Network relay, the 1-hop 5G ProSe UE-to-Network relay may provide the location information to the base station. For example, when the 1-hop 5G ProSe UE-to-Network relay is connected to a different PLMN from the 2-hop 5G ProSe UE-to-Network relay or when connected to the same PLMN, the 1-hop 5G ProSe UE-to-Network relay may provide the location information of the 2-hop 5G ProSe UE-to-Network relay to the base station. Alternatively, when the 1-hop 5G ProSe UE-to-Network relay is in a different cell from the 2-hop 5G ProSe UE-to-Network relay or when in the same cell, the 1-hop 5G ProSe UE-to-Network relay may provide the location information of the 2-hop 5G ProSe UE-to-Network relay to the base station.

At step 18, in a case where the 1-hop 5G ProSe UE-to-Network relay provides the location information of the 2-hop 5G ProSe UE-to-Network relay to the base station, the base station may provide the location information of the 2-hop 5G ProSe UE-to-Network relay to the AMF.

The operations according to the third example of the present disclosure may be performed based on a local policy/configuration of a 2-hop relay and/or a 1-hop relay, a policy/configuration/instruction provided from a network, and the like.

In a case (e.g., a case where the relay moves out of network coverage, a case where a serving cell is changed, etc.) where change occurs in the location information of the 2-hop 5G ProSe UE-to-Network relay, the 2-hop 5G ProSe UE-to-Network relay may notify the 1-hop 5G ProSe UE-to-Network relay of the changed information, which may then be provided to the network.

### 4. A fourth example of the disclosure of the present specification

An example of a method for providing location information of a UE-to-Network relay to an SMF/PCF in a case of multi-hop UE-to-Network relaying will be described.

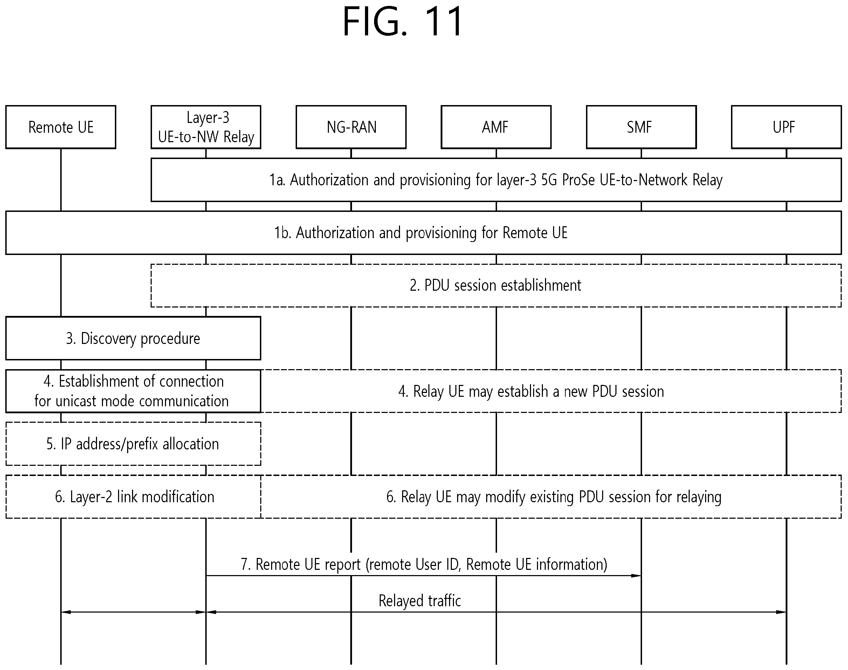

Hereinafter, based on the example of FIG. 11, an example of performing 5G ProSe communication through a 5G ProSe layer-3 UE-to-Network relay without N3IWF will be described. If the drawing/procedure according to FIG. 11 is extended to a two-hop UE-to-Network relaying scenario, the layer-3 UE-to-NW relay of the drawing/procedure according to FIG. 11 corresponds to a 1-hop 5G ProSe UE-to-Network relay, and it may be understood that a 2-hop 5G ProSe UE-to-Network relay exists between a remote UE and the layer-3 UE-to-NW relay.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 11 illustrates an example of relay communication according to an embodiment of the disclosure of the present specification.

For reference, for operations other than those described below, TS 23.304 V18.0.0 Figure 6.5.1.1-1 may be referred to.
1a. Authorization and provisioning for layer-3 UE-to-NW relay may be performed.
1b. Authorization and provisioning for the remote UE may be performed.
2. A PDU session establishment procedure may be performed.
3. A discovery procedure may be performed.
4. Establishment of a connection for unicast mode communication may be performed. Optionally, the relay UE may establish a new PDU session.
5. An IP address/prefix may be allocated.
6. Layer-2 link modification may be performed. The relay UE may modify an existing PDU session for relaying.
7. The relay may transmit a remote UE report message to the SMF. The remote UE report message may include a remote user ID and remote UE information.

Relayed traffic may be transmitted and received.

Before step 7 is performed, the following operations may be performed:

For example, the 1-hop 5G ProSe UE-to-Network relay may acquire location information (NCGI and/or TAI information) of the 2-hop 5G ProSe UE-to-Network relay from the 2-hop 5G ProSe UE-to-Network relay. The location information may be provided to the 1-hop 5G ProSe UE-to-Network relay when the 2-hop 5G ProSe UE-to-Network relay is within network coverage.

For example, when the 1-hop 5G ProSe UE-to-Network relay acquires the location information of the 2-hop 5G ProSe UE-to-Network relay, the 1-hop 5G ProSe UE-to-Network relay may provide the information to a base station. This may be performed only when the 1-hop 5G ProSe UE-to-Network relay is connected to a different PLMN from the 2-hop 5G ProSe UE-to-Network relay. Alternatively, this may be performed only when the 1-hop 5G ProSe UE-to-Network relay and the 2-hop 5G ProSe UE-to-Network relay are connected to the same PLMN. Alternatively, this may be performed only when the 1-hop 5G ProSe UE-to-Network relay is in a different cell from the 2-hop 5G ProSe UE-to-Network relay, or only when the 1-hop 5G ProSe UE-to-Network relay and the 2-hop 5G ProSe UE-to-Network relay are in the same cell.

At step 7, in a case where the 1-hop 5G ProSe UE-to-Network relay receives the location information of the 2-hop 5G ProSe UE-to-Network relay, the 1-hop 5G ProSe UE-to-Network relay may provide the location information of the 2-hop 5G ProSe UE-to-Network relay for the remote UE to the SMF. At this time, user information and/or an IP address and/or a MAC address of the 2-hop 5G ProSe UE-to-Network relay may also be provided.

Thereafter, although not shown in the example of FIG. 11, the SMF may deliver a remote UE report provided from the 1-hop 5G ProSe UE-to-Network relay to the PCF. This may be performed for providing the location information of the 2-hop 5G ProSe UE-to-Network relay for the remote UE to the PCF.

The above operations may be performed based on a local policy/configuration of the 2-hop relay and/or the 1-hop relay, or a policy/configuration/instruction provided from a network.

In a case (e.g., a case where the relay moves out of network coverage, a case where a serving cell is changed, etc.) where a change occurs in the location information of the 2-hop 5G ProSe UE-to-Network relay, the 2-hop 5G ProSe UE-to-Network relay may notify the 1-hop 5G ProSe UE-to-Network relay of the changed information, which may then be provided to the network.

### 5. A fifth example of the disclosure of the present specification

An example of a method for providing additional parameter(s) to a remote UE in case of multi-hop UE-to-Network relaying will be described.

An example of additional parameter(s) announcement procedure via multi-hop layer-3 U2N relay will be described.

According to the prior art, additional parameter(s) announcement procedure via multi-hop layer-3 U2N relay has not been defined.

In order to support multi-hop UE-to-Network relaying, additional parameter(s) announcement procedure needs to be supported. For example, additional parameter(s) announcement procedure via multi-hop layer-3 U2N relay, including details about additional discovery message handling, may be described.

Details about remote UE report and additional discovery message handling may be described.

An example of "additional parameter(s) announcement procedure" may be described. This procedure may be applied for the case of multi-hop layer-3 U2N relaying.

Information necessary for additional parameter(s) announcement procedure may be described based on TS 23.304 V18.4.0 S5.8.3.

Parameter(s) for additional parameter(s) announcement procedure via multi-hop layer-3 U2N relay may be added.

Additional parameter(s) announcement procedure via multi-hop layer-3 U2N relay may be defined.

An example of identifiers for 5G ProSe UE-to-Network relay will be described.

An example of common identifiers for 5G ProSe UE-to-Network relay will be described.

The following parameter(s) may be used for the 5G ProSe UE-to-Network relay discovery announcement message (model A), where source layer-2 ID and destination layer-2 ID may be used for sending and receiving the message and announcer info and relay service code may be included in the message:
- Source Layer-2 ID: the 5G ProSe UE-to-Network relay may self-select a source layer-2 ID for 5G ProSe UE-to-Network relay discovery.
- Destination Layer-2 ID: the destination layer-2 ID for 5G ProSe UE-to-Network relay discovery may be selected based on the configuration.
- Announcer Info: the announcer info may provide information (i.e., user info ID) about the announcing user.
- Relay Service Code: may be a parameter identifying a connectivity service the 5G ProSe UE-to-Network relay provides to a 5G ProSe remote UE. The relay service code may be configured in a 5G ProSe UE-to-Network relay for advertisement. Additionally, the relay service code may also identify authorized users the 5G ProSe UE-to-Network Relay would offer service to, and may be used to select the related security policies or information (e.g., a relay service code for relays for polices only may be different than a relay service code for relays for fire fighters only, even though the relays provides connectivity to same DN such as supporting internet access).

The following parameter(s) may be used for the 5G ProSe UE-to-Network relay discovery solicitation message (model B), where source layer-2 ID and destination layer-2 ID may be used for sending and receiving the message and discoverer info and relay service code may be included in the message:
- Source Layer-2 ID: the 5G ProSe remote-UE may self-select a source layer-2 ID for 5G ProSe UE-to-Network relay discovery.
- Destination Layer-2 ID: the destination layer-2 ID for 5G ProSe UE-to-Network relay discovery may be selected based on the configuration.
- Discoverer Info: provides information (e.g., user info ID) about the discoverer user.
- Target Info: provides information (e.g., user info ID) about the targeted discoveree user.
- Relay Service Code: may be information about connectivity that the discoverer UE is interested in. The relay service codes may be configured in the 5G ProSe remote UEs interested in related connectivity services.

The following parameter(s) may be used in the 5G ProSe UE-to-Network relay discovery response message (model B), where source layer-2 ID and destination layer-2 ID may be used for sending and receiving the message and discoveree info and relay service code may be included in the message:
- Source Layer-2 ID: the 5G ProSe UE-to-Network relay may self-select a source layer-2 ID for 5G ProSe UE-to-N etwork relay Discovery.
- Destination Layer-2 ID: may be set to the source layer-2 ID of the received 5G ProSe UE-to-Network relay discovery solicitation message.
- Relay Service Code: the relay service code may identify the connectivity service the 5G ProSe UE-to-Network relay provides to 5G ProSe remote UEs that matches the relay service code from the corresponding discovery solicitation message.
- Discoveree Info: may provide information (e.g., user info ID) about the discoveree.

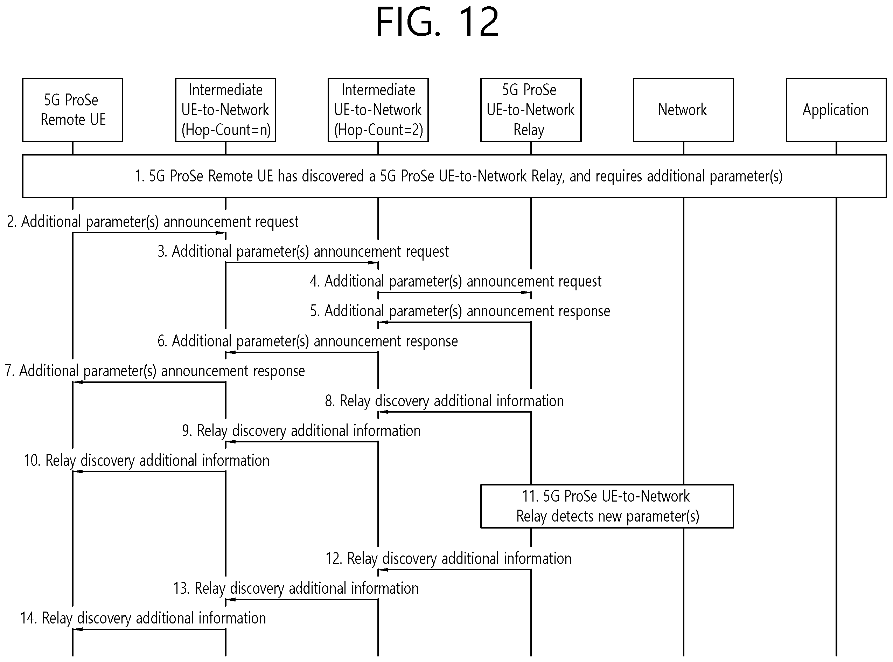

The following parameter(s) may be used in the relay discovery additional information message (using model A) based on the procedure (e.g., procedure based on an example of FIG. 12) for 5G ProSe UE-to-Network relay, where source layer-2 ID and destination layer-2 ID may be used for sending and receiving the message and the other parameter(s) may be included in the message:
- Source Layer-2 ID: the 5G ProSe UE-to-Network relay or the 5G ProSe intermediate UE-to-Network relay may self-select a source layer-2 ID to send the relay discovery additional information message.
- Destination Layer-2 ID: the destination layer-2 ID to send the relay discovery additional information message may be selected based on the configuration (e.g., configuration as described in clause 5.1.4.1 of 3GPP TS 23.304 V18.4.0).
- Relay Service Code: the relay service code may be associated with the message. The relay service code may be used to identify the security parameter(s) needed by the receiving UE to process the discovery message.
- Announcer Info: provides information about the announcing user (i.e. user info ID of the 5G ProSe UE-to-Network relay).
- Announcer Info of 5G ProSe intermediate UE-to-Network relay: the announcer info of 5G ProSe intermediate UE-to-Network relay identifies information (e.g., user info ID) of the 5G ProSe intermediate UE-to-Network relay with hop-count=2 (e.g., the 5G ProSe intermediate UE-to-Network relay located next to (positioned after) the 5G ProSe UE-to-Network relay). This parameter may be only applicable to the specified additional parameter(s) announcement procedure (e.g., refer to the procedure based on the example of FIG. 12) via multi-hop 5G ProSe layer-3 UE-to-Network relay.
- Additional parameter(s): the additional parameter(s) for 5G ProSe layer-3 UE-to-Network relay (when applicable).

NOTE 1: The UE implementation may ensure that when the UE self-selects source layer-2 IDs, the self-selected source layer-2 IDs are different between 5G ProSe direct discovery (including 5G ProSe UE-to-Network relay discovery) in 3GPP TS 23.304 V18.4.0 S6.3.2 and 5G ProSe direct communication (including 5G ProSe UE-to-Network relay communication) in 3GPP TS 23.304 V18.4.0 S6.4. Alternatively, the UE implementation may ensure that the self-selected source layer-2 IDs are different from any other provisioned destination layer-2 IDs as described in 3GPP TS 23.304 V18.4.0 S5.1 and any other self-selected source layer-2 IDs used in a simultaneous 5G ProSe direct discovery (including 5G ProSe UE-to-Network relay discovery) with a different discovery model.

NOTE 2: If a 5G ProSe UE-to-Network relay and 5G ProSe remote UE from different PLMNs discover each other, the relay service code may be associated with the same connectivity service, and the same relay service code may be provisioned based on service level agreement among PLMNs.

An example of identifiers for 5G ProSe layer-3 UE-to-Network relay will be described.

For 5G ProSe layer-3 UE-to-Network relay, a relay service code in the announcement message is associated with a set of PDU session parameter(s) (e.g., PDU session type, DNN, SSC mode, S-NSSAI, access type preference). The relay service code may also represent if the relay UE can provide secure N3IWF connection.

For 5G ProSe layer-3 remote UE discovering 5G ProSe layer-3 UE-to-Network relay, the relay service code in the solicitation message represents the PDU session parameter(s) that a PDU session of the relay should be able to support. The relay service code may also represent if the remote UE requires secure N3IWF connection.

The following additional parameter(s) may be used in the relay discovery additional information message (using model A) for 5G ProSe layer-3 UE-to-Network relay:
- NCGI: indicates the NCGI of the serving cell of the 5G ProSe layer-3 UE-to-Network relay. This parameter may be requested by application running on 5G ProSe layer-3 remote UE.
- TAI: indicates the tracking area identity of the serving cell of the 5G ProSe layer-3 UE-to-Network relay. This parameter may be used by 5G ProSe layer-3 remote UE to select a N3IWF.
- NCGI of 5G ProSe intermediate UE-to-Network relay: indicates the NCGI of the serving cell of the 5G ProSe intermediate UE-to-Network relay with hop-count=2 (e.g., the 5G ProSe intermediate UE-to-Network relay located next to (positioned after) the 5G ProSe UE-to-Network relay). This parameter may be only applicable to the additional parameter(s) announcement procedure via multi-hop 5G ProSe layer-3 UE-to-Network relay.

An example of additional parameter(s) announcement procedure via multi-hop 5G ProSe layer-3 UE-to-Network relay will be described.

Referring to FIG. 12, additional parameter(s) announcement procedure will be described. The additional parameter(s) announcement procedure may be used by a 5G ProSe remote UE to request a 5G ProSe UE-to-Network relay to announce additional parameter(s) (using model A). Based on the additional parameter(s) announcement procedure specified in 3GPP TS 23.304 V18.4.0 S6.5.1.3, an example of FIG. 12 will be described focusing on the differences.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 12 illustrates an example of a procedure related to an additional parameter(s) announcement according to an embodiment of the disclosure of the present specification.

FIG. 12 is an example of an additional parameter(s) announcement procedure via a multi-hop 5G ProSe layer-3 UE-to-Network relay.

If the number of hops between the 5G ProSe remote UE and the 5G ProSe UE-to-Network relay is 2, the steps and message exchanges between 5G ProSe intermediate UE-to-Network relays figured in FIG. 12 may not be performed.
1. 5G ProSe remote UE may have discovered a 5G ProSe UE-to-Network relay for connectivity to the network and may require additional parameter(s).
2. The remote UE may send to a relay an additional parameter(s) announcement request message.

The 5G ProSe remote UE may send to the 5G ProSe intermediate UE-to-Network relay an additional parameter(s) announcement request including the following additional information to obtain additional parameter(s):
- Relay Service Code: information about the connectivity service provided by the 5G ProSe UE-to-Network relay.
- Root Relay Info: identify information (i.e. user info ID) of the 5G ProSe UE-to-Network relay.

In addition to the additional parameter(s) described above, various parameter(s) for ensuring that the additional parameter(s) announcement request message is delivered to a 5G ProSe UE-to-Network relay providing a network connection service to a 5G ProSe remote UE may be included. For example, the following parameter(s) may be included in the additional parameter(s) announcement request message:
- Identify information (e.g., user info ID of each of intermediate UE-to-Network relay(s) and the UE-to Network relay) of all relays located on a path/route (or forming a path/route) for connecting the 5G ProSe remote UE to the network

In addition, the additional parameters may not be included in the additional parameter(s) announcement request message, and a conventional additional parameter(s) announcement request message may be transmitted. This may correspond to a case where the 5G ProSe intermediate UE-to-Network relay(s) can forward the additional parameter(s) announcement request message to the 5G ProSe UE-to-Network relay even without the additional parameter(s).

3-4. The 5G ProSe intermediate UE-to-Network relay (hop-count=n) may send the additional parameter(s) announcement request message to the next relay (e.g., an intermediate UE-to-Network relay (hop-count=2)). Finally, the additional parameter(s) announcement request message may be sent to the 5G ProSe UE-to-Network relay.

5. 5G ProSe UE-to-Network relay may send an additional parameter(s) announcement response message to the intermediate UE-to-Network relay (hop-count=2).

For example, the 5G ProSe UE-to-Network relay may acknowledge receipt of the request by sending an additional parameter(s) announcement response (including Additional_Parameter(s)_Announcement_Request_Refresh timer) message.

6-7. The additional parameter(s) announcement response message may be sent to the 5G ProSe remote UE.

8. The 5G ProSe UE-to-Network relay may announce the additional parameter(s) by sending relay discovery additional information message. For more details, the descriptions in clause 5.8.3 of the aforementioned TS 23.304 V18.4.0 may be referred to.

9. The 5G ProSe intermediate UE-to-Network relay with hop-count=2 may forward the relay discovery additional information message sent by the 5G ProSe UE-to-Network relay. When forwarding, the 5G ProSe intermediate UE-to-Network relay with hop-count=2 may include the following additional information if its (the 5G ProSe intermediate UE-to-Network relay's) NCGI is available:
- Announcer Info of 5G ProSe intermediate UE-to-Network relay: identify information (e.g., user info ID) of the 5G ProSe intermediate UE-to-Network relay based on hop-count=2 (or with hop-count=2).
- NCGI of 5G ProSe intermediate UE-to-Network relay: indicates the NCGI of the serving cell of the 5G ProSe intermediate UE-to-Network relay based on hop-count=2 (or with hop-count=2).

For example, the relay discovery additional information message may be forwarded by the 5G ProSe intermediate UE-to-Network relay if one or more of the following conditions are satisfied. However, the following conditions are merely examples, and various other conditions may be applied so that the relay discovery additional information message may be forwarded to the 5G ProSe remote UE in addition to the following conditions:
- A case where the 5G ProSe intermediate UE-to-Network relay supports a relay service code (RSC). This may be interpreted as supporting a connectivity service associated with the RSC.
- A case where the 5G ProSe intermediate UE-to-Network relay is an intermediate UE-to-Network relay of the 5G ProSe remote UE.
- A case where the 5G ProSe intermediate UE-to-Network relay is located at the next hop of the 5G ProSe UE-to-Network relay (e.g., based on the hop-count from the network).
- A case where the 5G ProSe intermediate UE-to-Network relay is a neighboring relay of the 5G ProSe UE-to-Network relay.
- A case where there is a unicast link formed between the 5G ProSe intermediate UE-to-Network relay and the 5G ProSe UE-to-Network relay.
- A case where the 5G ProSe intermediate UE-to-Network relay exists/is located on a path/route between the 5G ProSe remote UE and the 5G ProSe UE-to-Network relay.
- A case where the 5G ProSe intermediate UE-to-Network relay has a configuration for a destination layer-2 ID used for the received relay discovery additional information message.

10. The 5G ProSe intermediate UE-to-Network relay with hop-count=n may forward the relay discovery additional information message.

For example, the relay discovery additional information message may be forwarded by the 5G ProSe intermediate UE-to-Network relay if one or more of the following conditions are satisfied. However, the following conditions are merely examples, and various other conditions may be applied so that the relay discovery additional information message may be forwarded to the 5G ProSe remote UE in addition to the following conditions:
- A case where the 5G ProSe intermediate UE-to-Network relay supports a relay service code (RSC). This may be interpreted as supporting a connectivity service associated with the RSC.
- A case where the 5G ProSe intermediate UE-to-Network relay is an intermediate UE-to-Network relay of the 5G ProSe remote UE.
- A case where the 5G ProSe intermediate UE-to-Network relay is located at the next hop of the 5G ProSe remote UE (e.g., based on the hop-count from the 5G ProSe remote UE).
- A case where the 5G ProSe intermediate UE-to-Network relay is a neighboring relay of the 5G ProSe remote UE.
- A case where there is a unicast link formed between the 5G ProSe intermediate UE-to-Network relay and the 5G ProSe remote UE.
- A case where The 5G ProSe intermediate UE-to-Network relay exists/is located on a path/route between the 5G ProSe remote UE and the 5G ProSe UE-to-Network relay.
- A case where the 5G ProSe intermediate UE-to-Network relay has a configuration for a destination layer-2 ID used for the received relay discovery additional information message.

In a case where only one 5G ProSe intermediate UE-to-Network relay exists, the forwarding conditions described in step 9 and the forwarding conditions described in step 10 may be interpreted in a combined/integrated form.

11. The 5G ProSe UE-to-Network relay#1 may detect new or updated additional parameter(s). For example, the 5G ProSe UE-to-Network relay may detect new or updated additional parameter(s).

12-14. The relays may send a relay discovery additional information.

If the 5G ProSe intermediate UE-to-Network relay with hop-count=2 detects new or updated additional parameter(s) (e.g., change of its serving cell, moving out of network coverage from network coverage), the relay may send a relay discovery additional information message including the new or updated additional parameter(s). At this time, the 5G ProSe intermediate UE-to-Network relay with hop-count=2 may include parameter(s) related to the 5G ProSe UE-to-Network relay in the relay discovery additional information message based on the stored information. For this, the 5G ProSe intermediate UE-to-Network relay with hop-count=2 may keep a record of the additional parameter(s) from the 5G ProSe UE-to-Network relay.

For example, steps 12 to 14 may be performed in the same manner as steps 8 to 10.

NOTE: The NCGI of the 5G ProSe intermediate UE-to-Network relay with hop-count=2 may be used as supplementary by the 5G ProSe remote UE and may not be provided to the network side from the 5G ProSe remote UE.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

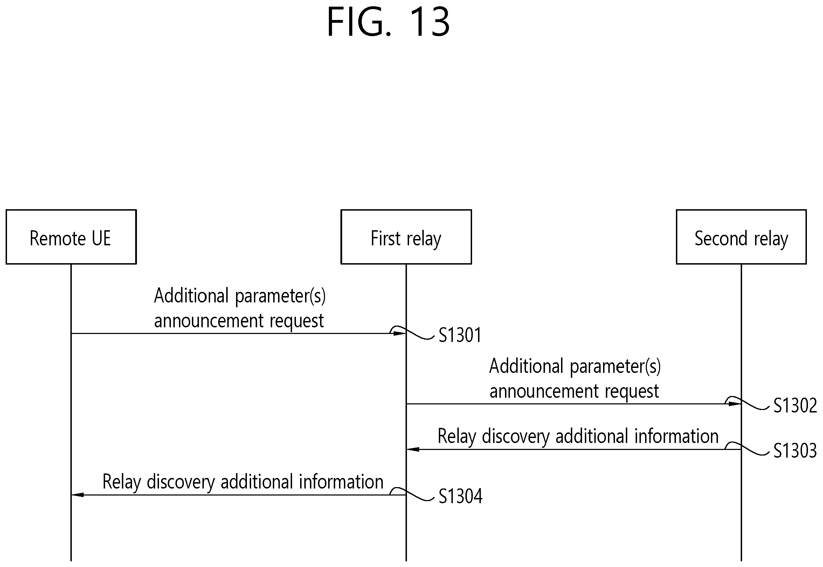

FIG. 13 illustrates an example of a procedure performed according to an embodiment of this disclosure.

For reference, the procedure illustrated in FIG. 13 is merely an example, and the scope of the disclosure of the present specification is not limited by the example of FIG. 13.

For example, for the example of FIG. 13, the operations described in the examples of FIGS. 1 to 12 may also be applied. For example, even if an operation, content, etc. is not directly described in the example of FIG. 13, the operation, content, etc. described in various examples of the disclosure of the present specification may be applied.

For reference, in the example of FIG. 13, the second relay may be a UE-to-Network relay connected to a base station. The first relay may be an intermediate UE-to-Network relay. In the example of FIG. 13, an example in which the first relay and the second relay directly communicate is illustrated, but this is merely an example. For example, one or more intermediate UE-to-Network relays may exist between the first relay and the second relay.

In step S1301, the remote UE may send an additional parameter(s) announcement request message to the first relay.

For example, the additional parameter(s) announcement request message may include relay service code and root relay information.

For example, the root relay information may identify information of the UE-to-Network relay (e.g., the second relay).

For example, the relay service code may be information related to a connectivity service provided by the UE-to-Network relay (e.g., the second relay).

In step S1302, the first relay may send an additional parameter(s) announcement request message to the second relay.

For example, based on the relay service code and the root relay information, the additional parameter(s) announcement request message may be sent to the UE-to-Network relay (e.g., the second relay).

In step S1303, the second relay may send a first relay discovery additional information message to the first relay.

For example, based on the UE-to-Network relay (e.g., the second relay) having received the additional parameter(s) announcement request message, the first relay discovery additional information message may be received. As another example, based on the UE-to-Network relay (e.g., the second relay) having detected new additional parameter(s) or updated parameter(s), the first relay discovery additional information message may be received.

For example, the first relay discovery additional information message may include additional parameter(s), the new additional parameter(s), or the updated parameter(s).

In step S1304, the first relay may send a second relay discovery additional information message to the remote UE.

For example, the first relay discovery additional information message may include a first hop-count value. For example, the second relay discovery additional information message may include a second hop-count value incremented by 1 from the first hop-count value.

For example, the first relay discovery additional information message may include announcer information of the UE-to-Network relay and an NR Cell Global ID (NCGI) of the UE-to-Network relay (e.g., the second relay).

For example, the second relay discovery additional information message may include announcer information of the intermediate UE-to-Network relay and an NR Cell Global ID (NCGI) of the intermediate UE-to-Network relay (e.g., the first relay).

For example, if the NCGI of the intermediate UE-to-Network relay (e.g., the first relay) is available, the second relay discovery additional information message may include announcer information of the intermediate UE-to-Network relay and the NR Cell Global ID (NCGI) of the intermediate UE-to-Network relay (e.g., the first relay).

For example, the announcer information included in the first relay discovery additional information message may be information identifying the UE-to-Network relay (e.g., the second relay) that sends the first relay discovery additional information message.

For example, the announcer information included in the second relay discovery additional information message may be information identifying the intermediate UE-to-Network relay (e.g., the first relay) that sends the second relay discovery additional information message.

For example, the NCGI included in the first relay discovery additional information message may be the NCGI of a serving cell of the UE-to-Network relay (e.g., the second relay).

For example, the NCGI included in the second relay discovery additional information message may be the NCGI of a serving cell of the intermediate UE-to-Network relay (e.g., the first relay).

For example, the NCGI of the UE-to-Network relay may be requested by an application running on the remote UE.

For example, the NCGI of the intermediate UE-to-Network relay may be requested by an application running on the remote UE.

For reference, the first relay may detect new additional parameter(s) or updated parameter(s). In this case, the first relay may send a third relay discovery additional information message including the new additional parameter(s) or the updated parameter(s) to the remote UE. Unlike what was described in the first example of the disclosure of the present specification, considering the number of hops from the remote UE, 5G ProSe UE-to-Network relay#2 may be referred to as a 1-hop 5G ProSe UE-to-Network relay (or the first 5G ProSe UE-to-Network relay or #1 5G ProSe UE-to-Network relay or hop#1 5G ProSe UE-to-Network relay). Additionally, 5G ProSe UE-to-Network relay#1 may be referred to as a 2-hop 5G ProSe UE-to-Network relay (or the second 5G ProSe UE-to-Network relay or #2 5G ProSe UE-to-Network relay or hop#2 5G ProSe UE-to-Network relay).

According to an embodiment of the disclosure of the present specification, the following operations may be performed.

For example, 1) if a remote UE needs location information (e.g., NCGI and/or TAI information) of a UE-to-Network relay, the remote UE may request the UE-to-Network relay to provide additional parameter(s).

For example, 2) when an intermediate UE-to-Network relay receives the request from the remote UE, the intermediate UE-to-Network relay may request the 1-hop UE-to-Network relay to provide additional parameter(s).

For example, 3) the 1-hop UE-to-Network relay may provide/announce its own location information.

For example, 4) the intermediate UE-to-Network relay may send the location information of the 1-hop UE-to-Network relay.

For example, 5) while performing 4) above, or instead of performing 4) above, the intermediate UE-to-Network relay may provide/announce its own location information to the remote UE. If the intermediate UE-to-Network relay is in network coverage, the intermediate UE-to-Network relay may provide/announce its own location information to the remote UE. Alternatively, this may be performed only when the intermediate UE-to-Network relay is in a serving cell different from the 1-hop UE-to-Network relay.

For example, 6) if a change occurs in the location information of the intermediate UE-to-Network relay thereafter (e.g., moving out of network coverage, a change in the serving cell, etc.), the intermediate UE-to-Network relay may provide/announce the changed information to the remote UE.

The present disclosure may have various effects.

For example, multi-hop UE-to-Network relaying may also effectively support an additional parameter(s) announcement procedure. Additionally, in a multi-hop UE-to-network relaying scenario, location information (e.g., cell information) of an intermediate UE-to-Network relay may be provided to a remote UE or a network. Accordingly, location of the remote UE may be identified more accurately, or additional information may be provided for the network to identify the location of the remote UE.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of a terminal (e.g., UE, remote UE, relay UE, intermediate UE-to-Network relay, UE-to-Network relay) described in the present disclosure may be implemented by the devices of FIGS. 1 to 3 described above. For example, the terminal may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal described in the present disclosure.

Additionally, instructions for performing operations of the terminal described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, PCF, V-UPF, UDM, 5GS, application etc.) or base stations (e.g., mobile base station, NG-RAN, gNB, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method, comprising:
receiving, from a remote user equipment (UE), an additional parameter announcement request message,
wherein the additional parameter announcement request message comprises a relay service code and root relay information, and
wherein the root relay information identifies information for a UE-to-Network relay;
transmitting, to the UE-to-Network relay, the additional parameter announcement request message;
receiving, from the UE-to-Network relay, a first relay discovery additional information message; and
transmitting, to the remote UE, a second relay discovery additional information message.

2. The method of claim 1,
wherein the additional parameter announcement request message is transmitted to the UE-to-Network relay, based on the relay service code and the root relay information.

3. The method of claim 1 or claim 2,
wherein the relay service code is information related to a connectivity service provided by the UE-to-Network relay.

4. The method of any one of claims 1 to 3,
wherein the first relay discovery additional information message comprises a first hop-count value, and
wherein the second relay discovery additional information message comprises a second hop-count value incremented by 1 from the first hop-count value.

5. The method of any one of claims 1 to 4,
wherein the first relay discovery additional information message is received based the additional parameter announcement request message is received by the UE-to-Network relay, or based that new additional parameter or updated parameter is detected by the UE-to-Network relay, and
wherein the first relay discovery additional information message comprises additional parameter, the new additional parameter, or the updated parameter.

6. The method of any one of claims 1 to 5,
wherein, based on a NR Cell Global ID (NCGI) of an intermediate UE-to-Network relay being available, the second relay discovery additional information message comprises announcer information of the intermediate UE-to-Network relay and the NCGI of the intermediate UE-to-Network relay.

7. The method of claim 6,
wherein the announcer information is information identifying information for the intermediate UE-to-Network relay that transmits the second relay discovery additional information message.

8. The method of claim 6 or claim 7,
wherein the NCGI is an NCGI of a serving cell of the intermediate UE-to-Network relay.

9. The method of any one of claims 6 to 8,
wherein the NCGI is requested by an application running on the remote UE.

10. The method of any one of claims 1 to 9, further comprising:
detecting new additional parameter or updated parameter; and
transmitting, to the remote UE, a third relay discovery additional information message comprising the new additional parameter or the updated parameter.

11. An apparatus, comprising:
at least one transceiver;
at least one processor; and
at least one memory storing instructions and operably connectable to the at least one processor,
wherein operations performed based on the instructions being executed by the at least one processor comprise the method of any one of claims 1 to 10.

12. A method, comprising:
receiving, from an intermediate user equipment (UE)-to-Network relay, the additional parameter announcement request message transmitted by a remote UE,
wherein the additional parameter announcement request message comprises a relay service code and root relay information, and
wherein the root relay information identifies information of a UE-to-Network relay; and
transmitting, to the intermediate UE-to-Network relay, a first relay discovery additional information message.

13. The method of claim 12,
wherein the relay service code is information related to a connectivity service provided by the UE-to-Network relay.

14. The method of claim 12 or claim 13,
further comprising detecting new additional parameter or updated parameter,
wherein the first relay discovery additional information message comprises the new additional parameter or the updated parameter.

15. The method of any one of claims 12 to 14,
wherein, based on the relay service code and the root relay information, the additional parameter announcement request message is transmitted from the intermediate UE-to-Network relay to the UE-to-Network relay.

16. An apparatus, comprising:
at least one transceiver;
at least one processor; and
at least one memory storing instructions and operably connectable to the at least one processor,
wherein operations performed based on the instructions being executed by the at least one processor comprise the method of any one of claims 12 to 15.
